# EUROPÄISCHE PATENTSCHRIFT

(11) **EP 3 069 816 B1**
(45) Veröffentlichungstag und Bekanntmachung des Hinweises auf die Patenterteilung: **19.09.2018**
(21) Anmeldenummer: 16159399.1
(22) Anmeldetag: 09.03.2016
(51) Int. Cl.: B23K 26/342, B22F 3/105, B23K 9/04, B23K 26/122, B29C 64/268

(54) **VERFAHREN UND ANLAGE ZUR ADDITIVEN FERTIGUNG UNTER VERWENDUNG EINES DRAHTFÖRMIGEN WERKSTOFFS**
METHOD AND INSTALLATION FOR ADDITIVE MANUFACTURING USING A WIRE-SHAPED MATERIAL
PROCEDE ET DISPOSITIF DE FABRICATION ADDITIVE A L'AIDE D'UNE MATIERE SOUS FORME DE FIL

(30) Priorität: 17.03.2015 DE 102015103940
(43) Veröffentlichungstag der Anmeldung: 21.09.2016
(73) Patentinhaber: GEFERTEC GmbH, 12681 Berlin (DE)
(72) Erfinder: Fischer, Georg, 13129 Berlin (DE); Röhrich, Tobias, 03185 Turnow-Preilack (DE); Haschke, Igor, 10437 Berlin (DE)
(74) Vertreter: Kaufmann, Sigfrid

(56) Entgegenhaltungen:
- DE-A1-102007 009 273
- US-A1- 2005 173 380

## Beschreibung

Die Erfindung betrifft ein Verfahren und eine Anlage zum Herstellen von, insbesondere metallischen, Formkörpern mittels eines additiven Fertigungsverfahrens, gemäß dem Oberbegriff der Ansprüche 1 und 9 (siehe, z.B. US 2005/0173380 A1), bei welchem der schichtweise Aufbau durch Abschmelzen eines drahtförmigen Werkstoffes erfolgt, wobei zum Zweck einer erhöhten Aufbaurate des Formkörpers während der Fertigung eine definierte Temperaturführung der bereits fertiggestellten Teile des Formkörpers ermöglicht wird.

Mit additiven Fertigungsverfahren - auch bekannt als generative Fertigung oder 3D-Druck - können, basierend auf vorhandenen CAD-Daten, direkt und zeitsparend Formkörper-Konstruktionen hergestellt werden, die mittels spanender Verfahren nicht oder nur unter hohem technischen und zeitlichem Aufwand herstellbar sind. Mittels additiver Verfahren wird der Formkörper in einzelnen, aufeinanderfolgenden Schichten aufgebaut.

Als additive Fertigungsverfahren zur Herstellung metallischer Formkörper sind beispielsweise das selektive Lasersintern (SLS), das selektive Laserschmelzen (SLM) oder das Auftragsschweißen mit Draht bzw. Band bekannt.

Beim Auftragsschweißen werden dreidimensionalen Strukturen, d. h. Formkörper, mittels Aufschmelzens und gleichzeitigem Aufbringens eines schmelzbaren Materials schichtweise aufgebaut. Das schmelzflüssige Metall verbindet sich beim Erstarren mit dem bereits fertiggestellten Teil des Formkörpers. Das aufzubringende Material kann in Form eines Pulvers z. B. Metallpulver, oder auch in Form eines Schweißdrahtes bzw. -bandes, von dessen Endbereich Metall abgeschmolzen wird, vorliegen.

Das Aufschmelzen kann z. B. mittels eines Lasers oder eines Lichtbogens erfolgen. Ein Lichtbogen wird durch starke elektrostatische Felder (mittels Ionisation der Atmosphäre bzw. des Schutzgases) zwischen zwei Elektroden erzeugt, durch welchen z. B. die Drahtspitze aufgeschmolzen und tröpfchenweise Metall abgeschmolzen wird. Hierbei kann die Drahtspitze des Ausgangsmaterials eine der Elektroden sein.

Der Vorgang des Aufschmelzens bzw. Abscheidens ist stets mit einem unerwünschten Wärmeeintrag in den Formkörper verbunden. Aus diesem Grunde wurden zur Wärmeabfuhr aktiv gekühlte Druckplattformen vorgeschlagen, wie z. B. in US 2007 / 0 122 562 A1 beschrieben.

Ein weiteres Problem ist, dass die Erstarrung des schmelzflüssigen Metalls nur in begrenztem Maße kontrolliert werden kann. Aufgrund der hohen Aufschmelz- und Erstarrungstemperaturen wird das Gefüge des Werkstoffes darüber hinaus signifikant verändert. So ist z. B. das Auftreten von Eigenspannungen bekannt, die sich in einem Verziehen des Formkörpers manifestieren können.

Die Gefügeeigenschaften und die Eigenspannungszustände werden dabei, neben den Eigenschaften des Werkstoffes, maßgeblich von der zum Aufschmelzen eingebrachten Wärmemenge und -verteilung und dem Abtransport dieser Wärmemenge durch thermische Leitung aus dem Formkörper beeinflusst.

Wird der Wärmeabtransport aus dem lokal aufgeschmolzenen Bereich während der Fertigung nicht oder nur wenig berücksichtigt, so resultiert dies zum einen in erheblichen Einschränkungen in Bezug auf die erreichbaren Fertigungsqualitäten und zum anderen in notwendigen Nacharbeiten, wie insbesondere einer thermischen Nachbehandlung in Form von z. B. Normalisieren oder Spannungsarmglühen.

Weiterhin stellt im Bereich der additiv-generativen Fertigungsverfahren die Abkühlgeschwindigkeit bei der Herstellung metallischer Bauteile den limitierenden Faktor in Bezug auf die maximale Aufbaurate dar, da in der Regel mit zunehmender Aufbauhöhe die Wärmeableitung deutlich verschlechtert wird.

In der DE 101 08 612 C1 wird vorgeschlagen, die Ummantelung des Bauraums, in welchem der Formkörper mittels additivem Verfahrens hergestellt wird, derart zu beheizen, dass sich eine Temperaturverteilung in der Ummantelung einstellt, die ausgehend von den an die zuletzt gesinterte Oberfläche des Schichtkuchens angrenzenden Bereichen der Ummantelung in Richtung auf den Bauraumboden hin abnimmt. Dadurch wird die Temperierung der einzelnen Schichten zwar vergleichmäßigt, der Wärmeabtransport wird jedoch nicht gefördert.

Ein Verfahren und eine Vorrichtung der Rapid-Technologie zur Herstellung eines dreidimensionalen Gegenstandes aus einem verfestigbaren Material, wobei nach Fertigstellung des Gegenstandes innerhalb des Bauraums eine zusätzliche Kühlung erfolgt, ist in DE 10 2007 057 450 A1 beschrieben. Nachteilig ist jedoch, dass die Abkühlung des Gegenstandes zum Zwecke einer Verbesserung der Gefügestruktur erst im Anschluss an den Herstellungsprozess erfolgt.

Aus DE 10 2007 009 273 A1 ist ein Verfahren zur Herstellung eines dreidimensionalen Gegenstandes durch additives Auftragen und Verfestigen eines ausgewählten Teils einer pulverförmigen Materialschicht, entsprechend einem Querschnitt des herzustellenden Gegenstandes, mittels Bestrahlens mit einem Energie- oder Materialstrahl unter Erwärmung der bestrahlten Teile und deren Umgebung, bekannt, wobei der während des wiederholten Auftragens und Bestrahlens aus einer Mehrzahl von Schichten gebildete Schichtkuchen zusätzlich, zumindest teilweise, von einem Fluid durchströmt wird, sodass die verfestigten Teile der Schichten während des Herstellungsprozesses permanent von dem durch die pulverförmigen Bereiche der Schichten strömenden Fluid temperiert, insbesondere gekühlt, werden.

Nachteilig bei diesem Verfahren ist, dass die abführbare Wärmemenge stark von der Porosität der pulverförmigen Anteile des Schichtkuchens abhängt. Insbesondere kann nur ein kleiner Fluidmassestrom, entsprechend der im Schichtkuchen gebildeten Perkolationspfade, zur Wärmeabfuhr genutzt werden, wobei Flüssigkeiten, die im Vergleich zu Gasen eine größere Wärmemenge pro Zeiteinheit abführen können, in diesem Fall als Kühlfluid aufgrund ihrer Wechselwirkung mit dem Schichtkuchen ungeeignet sind.

Aufgabe der Erfindung ist es, ein Verfahren zur additiv-generativen Fertigung eines metallischen Formkörpers unter Verwendung eines Drahtes als Ausgangsmaterial zur Verfügung zu stellen, wobei eine hohe Aufbaurate ermöglicht und die Temperaturführung in dem schichtweise aufzubauenden Formkörper in einem weiten Temperaturbereich definiert steuerbar sein soll, sodass ein derartig gefertigter Formkörper eine homogene Gefügestruktur aufweist sowie mit im Vergleich zum Stand der Technik verkürztem Zeitaufwand reproduzierbar hergestellt werden kann.

Die Lösung dieser Aufgabe erfolgt durch ein Verfahren zur additiven Fertigung mittels eines drahtförmigen Werkstoffs gemäß dem Anspruch 1 sowie eine Anlage gemäß dem Anspruch 10. Zweckmäßige Weiterbildungen der Erfindung sind Gegenstand der Unteransprüche.

Gemäß der Erfindung wird ein additives Fertigungsverfahren zur Herstellung eines Formkörpers, insbesondere eines metallischen Formkörpers, bereitgestellt, mittels welchem der Formkörper aus einem drahtförmigen, an der Drahtspitze unter Energiezufuhr, vorzugsweise mit einem Lichtbogen, abzuschmelzenden Werkstoff schichtweise aufgebaut wird, wobei während der Herstellung mittels einer Wärmeübertragungsflüssigkeit eine Temperierung der bereits fertiggestellten Teile des Formkörpers erfolgt.

Die hierbei verwendete Wärmeübertragungsflüssigkeit ist ein flüssiges oder fließfähiges Kühlmittel; es wird im Folgenden auch kurz als "Flüssigkeit" bezeichnet. Außerdem weist sie eine im Vergleich zu Luft oder Gasen deutlich höhere Wärmekapazität und Wärmeleitfähigkeit auf, wobei die Wärmeübertragungsflüssigkeit vorzugsweise wenig korrosiv und schwer entzündlich ist. Beispielsweise kann ein Öl oder eine Sole (kolloidale Dispersion) verwendet werden. Es kann jedoch auch vorgesehen sein, ein (fließfähiges) Gel als Wärmeübertragungsflüssigkeit einzusetzen.

Das additive Fertigen kann durch Auftragsschweißen unter Verwendung eines Lasers oder eines Lichtbogens erfolgen, wobei das schichtweise Aufbauen aus einem drahtförmigen Werkstoff nicht auf diese Art des Auftragsschweißens eingeschränkt ist.

Zur Durchführung des Verfahrens wird eine Fertigungsvorrichtung verwendet, die einen Bearbeitungskopf umfasst. An diesem Bearbeitungskopf ist z. B. die Werkstoffzuführeinrichtung zur Zuführung des Schweißdrahtes angeordnet.

Gemäß der Erfindung erfolgt der schichtweise Aufbau des Formkörpers in einem wannen- oder kastenförmigen Bauraum, der nach oben hin offen oder auch vollständig abgeschlossenen (d. h., der Bauraum ist gegen die Umgebung abgedichtet) sein kann. Weiterhin kann vorgesehen sein, dass in dem Bauraum eine Schutzgasatmosphäre herrscht. Beispielsweise kann ein Schutzgas mit einer höheren Dichte als Luft (d. h., es ist schwerer als Luft) verwendet werden, sodass es bei einem nach oben offenen Bauraum in demselben verbleibt.

Der Formkörper wird in dem Bauraum auf einer Druckplattform aufgebaut, wobei vorgesehen sein kann, dass die Druckplattform nach Fertigstellung jeweils einer Schicht um die Höhe dieser Schicht in vertikaler Richtung nach unten bewegt wird. Es kann auch vorgesehen sein, dass der Bearbeitungskopf der Fertigungsvorrichtung, d. h. die Werkstoffzuführeinrichtung bzw. die Drahtspitze, entsprechend des schichtweisen Wachsens des Formkörpers in der Höhe nachgeführt wird, während die Druckplattform unbewegt ist.

Unter dem nachfolgend verwendeten Begriff "Fertigungsebene" ist diejenige Schicht des im (schichtweisen) Aufbau befindlichen Formkörpers zu verstehen, die gerade bearbeitet bzw. aufgebaut wird, d. h. in die unmittelbar der Wärmeeintrag durch die Energiezufuhr zum Aufschmelzen bzw. den schmelzflüssig aufgebrachten Werkstoff erfolgt.

Erfindungsgemäß wird in den Bauraum, in welchem der Formkörper hergestellt wird, die Wärmeübertragungsflüssigkeit eingeleitet. Hierbei ist vorgesehen, den Bauraum nur teilweise zu fluten, indem der Bauraum bevorzugt nur maximal bis zur Höhe der Fertigungsebene geflutet wird, sodass die Flüssigkeit den bereits aufgebauten Teil des Formkörpers zumindest teilweise umschließt, die Fertigungsebene selbst aber "trocken" bleibt, d. h. mit der Wärmeübertragungsflüssigkeit zumindest während der Schmelz- und Abscheidevorgänge nicht in Berührung kommt.

Das hierin verwendete Verb "umschließen" beinhaltet sowohl ein Umschließen des Formkörpers mit strömender, d. h. bewegter, Flüssigkeit, als auch ein Umschließen mit "stehender", d. h. im Wesentlichen unbewegter, Flüssigkeit.

Vorzugsweise wird der Flüssigkeitsstand auf wenige Millimeter (z. B. etwa 10 mm) unterhalb der Fertigungsebene, d. h. der Oberkante des bereits aufgebauten Formkörperteils, eingestellt, wobei er jedoch bevorzugt mindestens 50% der Höhe des bereits aufgebauten Formkörperteils beträgt.

Mit dem sukzessiven Aufbau des Formkörpers wird sodann der Flüssigkeitsstand nachgeführt, d. h. die Fertigungsebene bleibt "trocken" während die bereits aufgebauten Teile des Formkörpers von der Flüssigkeit umschlossen werden. Das Nachführen bzw. Anpassen des Flüssigkeitsstandes kann gesteuert oder geregelt erfolgen.

Gemäß der Erfindung bleibt somit der Abstand in lotrechter Richtung zwischen Flüssigkeitsspiegel und Werkstoffzuführeinrichtung während der Fertigung konstant. Mit zunehmender Aufbauhöhe wird z. B. die Druckplattform abgesenkt und der Formkörper taucht entsprechend tiefer in die Wärmeübertragungsflüssigkeit ein. Bevorzugt ist die Höhe des Flüssigkeitsspiegels an die Position des Bearbeitungskopfes (bzw. der Werkstoffzuführeinrichtung) in Richtung senkrecht zur Fertigungsebene, d. h. an seine Höhenposition, gekoppelt. Zum Beispiel wird der Flüssigkeitsstand angehoben, wenn der Bearbeitungskopf nach oben bewegt wird, und abgesenkt, wenn der Bearbeitungskopf nach unten bewegt wird.

Die Höhe des Flüssigkeitsstands und des Bearbeitungskopfes bzw. der Werkstoffzuführeinrichtung kann mittels geeigneter Sensoren (z. B. optische Sensoren, die auf Basis von Extinktion oder Reflektion arbeiten, oder allgemein bekannte Feuchtigkeitssensoren) gemessen und daraus die Menge der in den Bauraum zu füllenden bzw. durchzuleitenden Wärmeübertragungsflüssigkeit bestimmt werden. Bevorzugt sind diese Sensoren in den Bearbeitungskopf bzw. die Werkstoffzuführeinrichtung integriert oder an diesen fixiert.

Es kann auch ein mechanischer Füllstandsregler (z. B. mit einem sog. Schwimmer) vorgesehen sein, der an den Bearbeitungskopf bzw. die Werkstoffzuführeinrichtung angekoppelt ist und den Füllstand entsprechend der Position der Werkstoffzuführeinrichtung in Bezug zur Richtung senkrecht zur Fertigungsebene (z-Richtung) regelt, beispielsweise durch Freigabe in entsprechender Höhe in den Seitenwänden des Bauraums eingebrachter Wärmeübertragungsflüssigkeits-Eintrittsöffnungen bzw. - Austrittsöffnungen.

Über ein Kühl-/Heizsystem wird die Temperatur der Wärmeübertragungsflüssigkeit geregelt, wodurch eine definierte Temperatur bzw. Abkühlrate der Fertigungsebene des Formkörpers eingestellt werden kann. Hierbei kann ein aktives Kühlen des Formkörpers, aber auch ein aktives Heizen vorgesehen sein.

Ein Vorteil des erfindungsgemäßen Verfahrens zum schichtweisen Aufbau eines Formkörpers besteht darin, dass mittels der während der Herstellung des Formkörpers durch den Bauraum strömenden bzw. in dem Bauraum stehenden Flüssigkeit die Temperatur der bereits fertiggestellten Teile des Formkörpers definiert eingestellt werden kann.

Durch die Temperierung ist es ermöglicht, die Erwärmung bzw. Abkühlung des Formkörpers während seines schichtweisen Aufbaus immer im werkstoffspezifisch optimalen Bereich zu halten. Durch diese für die Herstellung bestmögliche Wärmeführung ist eine zusätzlich erhöhte Prozessgeschwindigkeit erreichbar, da ein Wärmestau vermieden und dadurch die Schichtauftragsraten ohne Verschlechterung der spezifischen Werkstoffeigenschaften deutlich erhöht werden können.

Indem die bereits fertiggestellten Teile des Formkörpers ständig von einer Wärmeübertragungsflüssigkeit umschlossen sind, sind diese Bereiche zudem äußerlich, z. B. vor Spritzern, geschützt, was den erforderlichen Nachbearbeitungsaufwand erheblich minimieren kann.

Außerdem kann die den Formkörper umschließende Wärmeübertragungsflüssigkeit (neben der ggf. im Bauraum vorherrschenden Schutzgasatmosphäre) als Oxidationsschutz wirken. Dies ist insbesondere dann der Fall, wenn als Wärmeübertragungsflüssigkeit z. B. eine korrosionsverhütende Flüssigkeit verwendet wird.

Es kann vorgesehen sein, die Wärmeübertragungsflüssigkeit durch den Bauraum strömen zu lassen. Hierfür können die Wandungen des Bauraums Wärmeübertragungsflüssigkeits-Eintrittsöffnungen, durch welche die Flüssigkeit in den Bauraum eintritt, und Wärmeübertragungsflüssigkeits-Austrittsöffnungen, durch welche die Flüssigkeit aus dem Bauraum heraustritt, aufweisen. Es kann aber auch vorgesehen sein, eine oder mehrere Wärmeübertragungsflüssigkeits-Zuführleitungen von oben in den z. B. nach oben offenen Bauraum einzuführen. An den Eintritts- und Austrittsöffnungen für die Wärmeübertragungsflüssigkeit können einzeln ansteuerbare Ventile zum Öffnen bzw. Schließen der Öffnungen vorgesehen sein.

Indem der Bauraum, z. B. an seinen Seitenwänden und/oder seiner Bodenplatte, eine Wärmeübertragungsflüssigkeitszufuhr und -ableitung aufweist, kann die Wärmeübertragungsflüssigkeit stetig während der generativen Fertigung fließen, d. h. die bereits fertiggestellten Schichten des zu fertigenden Formkörpers umströmen. Hierbei kann mittels entsprechender Wärmeübertragungsflüssigkeitsleitungen ein geschlossener Flüssigkeitskreislauf realisiert werden, wobei die Wärmeübertragungsflüssigkeit außerhalb des Bauraums temperiert und/oder mittels geeigneter Reinigungsvorrichtungen gereinigt wird, um es anschließend erneut für die Temperierung zu verwenden. Es kann aber auch vorgesehen sein, den schichtweisen Aufbau in stehender Flüssigkeit durchzuführen. Es wird also nur solange Wärmeübertragungsflüssigkeit in den Bauraum eingeleitet, bis ein vorgegebener Flüssigkeitsstand erreicht ist. Anschließend wird die Zufuhr von Wärmeübertragungsflüssigkeit in den Bauraum gestoppt. Erst nach Fertigstellung des Formkörpers oder nach dem Eintreten vorgegebener Ereignisse wird die Wärmeübertragungsflüssigkeit teilweise oder vollständig aus dem Bauraum entfernt und ggf. durch saubere, temperierte Wärmeübertragungsflüssigkeit ersetzt. Auch hier kann ein geschlossener Flüssigkeitskreislauf realisiert sein, wobei die Wärmeübertragungsflüssigkeit außerhalb des Bauraums temperiert und/oder gereinigt wird, d. h., die Temperierung und Reinigung erfolgt zyklisch.

Gemäß der Erfindung wird der Flüssigkeitsspiegel der Wärmeübertragungsflüssigkeit im Bauraum nicht nur (geregelt oder gesteuert) der Fertigungsebene nachgeführt, sondern kann kurzzeitig über die Fertigungsebene hinaus angehoben und anschließend wieder unter die Fertigungsebene abgesenkt werden, d. h. der Formkörper (bzw. dessen bereits fertiggestellte Schichten) wird für eine vorgegebene Zeitdauer überflutet. Während dieser Phase wird die Energiezufuhr zum Aufschmelzen, d. h. der Fertigungsprozess, unterbrochen.

Das Anheben des Flüssigkeitsspiegels über die Fertigungsebene erfolgt bei Auftreten eines vorgegebenen Ereignisses. Das Ereignis kann ein zyklisch wiederkehrender Zeitpunkt (der in vorgegebenen, dem Zyklus entsprechenden Zeitabständen auftritt) oder ein zeitunabhängiges Ereignis, wie z. B. das Überschreiten einer vorgegebenen Schwellentemperatur der Wärmeübertragungsflüssigkeit oder des Formkörpers, sein.

Ebenso kann die Zeitdauer der Überflutung fest vorgegeben sein oder an ein zweites Ereignis, z. B. eine Temperaturmessung, gekoppelt sein. So kann eine zweite, niedrigere Schwellentemperatur vorgegeben sein, bei deren Unterschreiten der Flüssigkeitsspiegel wieder unter die Fertigungsebene abgesenkt (d. h. die Fertigungsebene aus der Wärmeübertragungsflüssigkeit auftaucht) und das Aufschmelzen und Abscheiden des Werkstoffes fortgesetzt wird.

Hierzu kann eine Temperatur des gesamten Formkörpers, eines Bereiches des Formkörpers, der Fertigungsebene oder des Bearbeitungspunktes (d. h. der Position auf der Fertigungsebene, an der der oder die schmelzflüssigen Ausgangswerkstoffe auf die Oberfläche aufgebracht werden) kontinuierlich oder in vorgegebenen Zeitabständen überwacht werden. Hierbei kann die Temperatur integral (d. h. ein gemittelter Messwert) oder ortsaufgelöst, z. B. mittels eines Kamerasystems, gemessen werden. Beispielsweise kann ein mit einer Wärmebildkamera aufgenommenes Wärmebild in Echtzeit hinsichtlich einer Temperaturverteilung auf der Oberfläche des Formkörpers bzw. eine Abfolge von Bildern hinsichtlich einer zeitlichen Änderung der Temperaturverteilung ausgewertet werden.

Es kann auch vorgesehen sein, die Zyklen der Überflutung (d. h. Zeitpunkt des Auslösens und Dauer) an einen räumlichen oder zeitlichen Temperaturgradienten zu koppeln. Beispielsweise kann eine Überflutung ausgelöst werden, wenn der Temperaturgradient von der Fertigungsebene Richtung Druckplattform zunehmend abflacht und einen vorgegebenen Grenzwert unterschreitet.

Das Ereignis zum Auslösen der Überflutung kann auch das Auftreten von Siedebläschen (Dampfkavitation) in der Wärmeübertragungsflüssigkeit an den Seitenwänden des Formkörpers sein, da Kavitationen die Wärmeabfuhr durch die Wärmeübertragungsflüssigkeit signifikant verschlechtern können. Hierzu kann beispielsweise ein Bilderfassungs- und Auswertesystem installiert sein, das bei der Erfassung von Dampfkavitation ein Signal ausgibt zum Anheben des Flüssigkeitsspiegels über die Fertigungsebene.

Durch die kontinuierliche Überwachung der Temperatur ist es möglich, auf unerwünschte Änderungen der Temperatur des Formkörpers, insbesondere in der Nähe der Fertigungsebene, instantan durch eine entsprechende Nachregelung der Wärmeübertragungsflüssigkeits-Temperatur und/oder eine Überflutung des Formkörpers bzw. der Fertigungsebene mit Wärmeübertragungsflüssigkeit zu reagieren.

Der Vorteil der regelmäßigen oder nach vorgegebenem Ereignis ausgelösten Überflutungen des Formkörpers bzw. der Fertigungsebene mit Wärmeübertragungsflüssigkeit ist eine effektivere, d. h. schnellere, Wärmeabfuhr aus dem ggf. überhitzten Fertigungsbereich. Damit geht verfahrensgemäß eine gegenüber dem Stand der Technik deutlich höhere Prozesseffizienz einher.

Die Erfindung kann weiter derart ausgebildet sein, dass die Druckplattform temperiert wird. Hierzu kann die Druckplattform einzelne Kanäle oder ein bzw. mehrere zusammenhängende Kanalsysteme aufweisen, durch welche, insbesondere zu Beginn des Herstellungsverfahrens, die Wärmeübertragungsflüssigkeit durchgeleitet wird. So kann z. B. der beim Aufbau der ersten Schichten, wenn in den Bauraum noch keine Wärmeübertragungsflüssigkeit eingeleitet wurde, erfolgende Wärmeeintrag effektiv durch Kühlung der Druckplattform vermittels eines durch die Druckplattform strömenden Kühlmittels abgeführt werden. Es kann vorgesehen sein, dass die in den Bauraum einzufüllende Wärmeübertragungsflüssigkeit gleichfalls als Kühlmittel für die Druckplattform verwendet wird.

Weiterhin kann vorgesehen sein, dass die Druckplattform, beispielsweise auf ihrer Deckfläche, auf welcher der Formkörper aufgebaut wird, eine Vielzahl von einzeln verschließbaren Wärmeübertragungsflüssigkeits-Austrittsöffnungen aufweist. So kann die durch die Druckplattform geleitete Wärmeübertragungsflüssigkeit aus der Druckplattform heraus in den Bauraum eintreten.

Gemäß einer weiteren Ausgestaltungsvariante erfolgt der Aufbau des Formkörpers in der Art, dass in Wandungen desselben Kühlkanäle "eingearbeitet" werden, d. h., die Wandungen des Formkörpers werden nicht massiv gebaut, sondern mit einem in die Wandung integrierten Kanalsystem versehen. Noch während der Fertigung des Formkörpers kann vorgesehen sein, Wärmeübertragungsflüssigkeit durch diese Kanäle zu leiten, sodass die beim Schichtaufbau eingebrachte Wärme in unmittelbarer Nähe ihres Entstehungsortes von der Wärmeübertragungsflüssigkeit abtransportiert wird.

Hierbei können Flüssigkeitseintrittsöffnungen derart an der die Druckplattform kontaktierenden Aufstandsfläche der Bodenplatte des Formkörpers bzw. den die Druckplattform kontaktierenden Wandungen positioniert werden, dass sie mit Wärmeübertragungsflüssigkeits-Austrittsöffnungen der Druckplattform überlappen, sodass die Wärmeübertragungsflüssigkeit über die Druckplattform in die Bodenplatte bzw. die Wandungen des Formkörpers eingeleitet wird.

Beispielsweise werden die CAD-Daten des herzustellenden Formkörpers vor dessen Aufbau derart modifiziert, dass die Wandungen (zumindest bereichsweise) und ggf. die Bodenplatte ein Kanalsystem und Flüssigkeitseintrittsöffnungen aufweisen. Vorzugsweise wird das in die Wandung integrierte Kanalsystem derart gestaltet, dass es nach Fertigstellung des Formkörpers äußerlich unsichtbar bleibt.

Weiterhin kann vorgesehen sein, beispielsweise mittels einer Gebläseeinrichtung, die bei Absenken des Flüssigkeitsspiegels aus der Wärmeübertragungsflüssigkeit auftauchenden Bereiche des Formkörpers aktiv zu trocknen.

Weiter kann das Verfahren zur additiven Fertigung derart ausgestaltet sein, die Temperatur in einzelnen Bereichen des Bauraums unterschiedlich einzustellen. Beispielsweise kann in Aufbaurichtung, d. h. von unten nach oben, ein konstanter räumlicher Temperaturgradient ausgebildet sein, wobei die Temperatur in der Nähe der Druckplattform geringer ist als im Bereich der Fertigungsebene.

Gemäß einer Ausführungsform kann die Temperatur der Wärmeübertragungsflüssigkeit zeitlich variiert werden, d. h., es wird ein zeitlicher Temperaturgradient vorgegeben.

Es ist auch möglich, zeitlichen und räumlichen Temperaturgradienten zu kombinieren, wobei z. B. für die Fertigungsebene eine zeitlich konstante Temperatur vorgegeben wird, während die Temperatur der Bodenplatte des aufzubauenden Formkörpers (bzw. der Druckplattform) mit zunehmender Bauhöhe absinkt.

Gemäß einer Ausgestaltung der Erfindung kann eine aktive Kühlung der Druckplattform bzw. der Bodenplatte des Formkörpers vermittels in die Druckplattform integrierter Peltierelemente erfolgen. Diese Peltierelemente können unterstützend zu einer Kühlung mittels die Druckplattform durchfließender Wärmeübertragungsflüssigkeit oder alleinig für eine Wärmeabfuhr aus der Druckplattform bzw. der Bodenplatte des Formkörpers eingesetzt werden.

Die Erfindung kann weiter derart ausgebildet sein, dass nach jedem Überflutungsvorgang, d. h. Anheben des Flüssigkeitsspiegels über die Fertigungsebene, die Wärmeübertragungsflüssigkeit komplett aus dem Bauraum entfernt bzw. abgelassen wird und hierauf der Bauraum erneut mit Wärmeübertragungsflüssigkeit bis zu einer vorgegebenen Höhe unterhalb der Fertigungsebene aufgefüllt wird, bevor das schichtweise Abscheiden durch Aufschmelzen des mindestens einen drahtförmigen Werkstoffs fortgesetzt wird.

Zusätzlich kann vorgesehen sein, die Wärmeübertragungsflüssigkeit diskontinuierlich durch den Bauraum strömen zu lassen, d. h., zu vorgegebenen Ereignissen (z. B. dem Überschreiten einer Schwellentemperatur) erfolgt eine Anströmung des Formkörpers mit temporär erhöhter Anströmgeschwindigkeit.

Die erfindungsgemäße Anlage ergibt sich mit ihren Merkmalen aus dem vorgehend beschriebenen Verfahren, sodass sie hier nicht nochmals im Detail erläutert wird.

Die Erfindung wird nachfolgend anhand eines Ausführungsbeispiels näher erläutert. Dazu zeigen in schematischer Darstellung die
Figur 1: drei sukzessive Phasen einer Variante des Verfahrens, und
Figur 2: eine Anlage zur Durchführung des Verfahrens im Querschnitt.

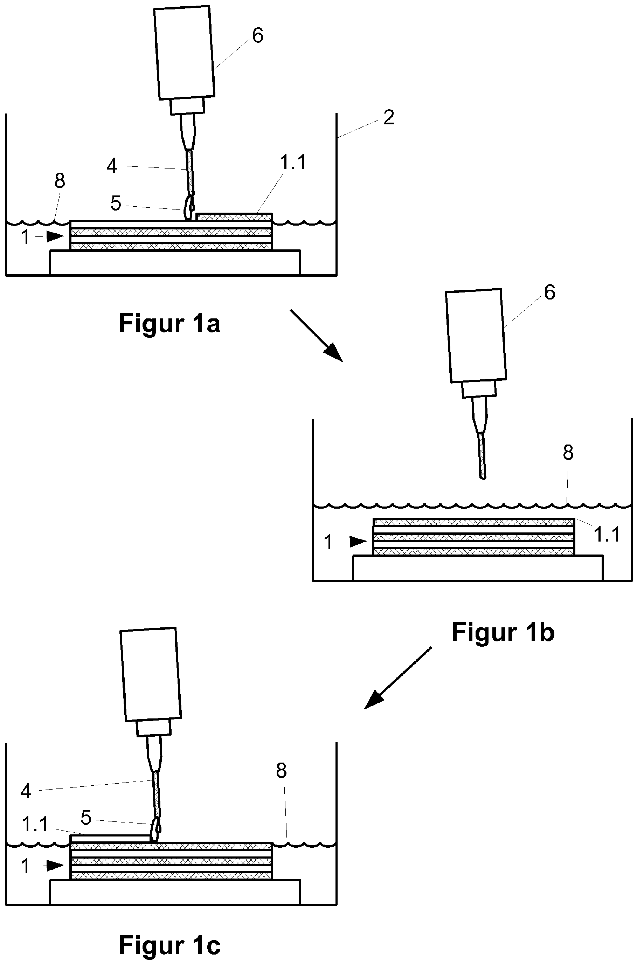

Der Formkörper 1 wird, wie in Figur 1a gezeigt, in dem Bauraum 2 schichtweise aufgebaut, indem von dem durch die Werkstoffzuführeinrichtung 6 zugeführten Metalldraht 4 mittels des Lichtbogens 5 einzelne Metalltröpfchen abgeschmolzen und in der Fertigungsebene 1.1 abgeschieden werden.

In den Bauraum 2 ist die Wärmeübertragungsflüssigkeit 8 eingefüllt, wobei die Fertigungsebene 1.1 des Formkörpers 1 aus der Wärmeübertragungsflüssigkeit 8 herausragt, d. h. unbenetzt bleibt.

Da der Formkörper 1 durch den Lichtbogen 5 erhitzt wird, wird gemäß der hier (zur besseren Veranschaulichung des Verfahrens) gezeigten Variante in zyklischen Zeitabständen die Werkstoffzuführeinrichtung 6 angehoben, wie in Figur 1b zu sehen. Synchron hierzu wird auch der Flüssigkeitsspiegel der Wärmeübertragungsflüssigkeit 8 über die Fertigungsebene 1.1 angehoben; während dieser Zeit erfolgt kein Aufbau des Formkörpers 1.

Figur 1c zeigt, dass, nachdem der Formkörper 1 ausreichend abgekühlt wurde, der Metalldraht 4 und der Flüssigkeitsspiegel der Wärmeübertragungsflüssigkeit 8 wieder abgesenkt werden und der Lichtbogen 5 zur weiteren Abscheidung von Metall in der Fertigungsebene 1.1 gezündet wird.

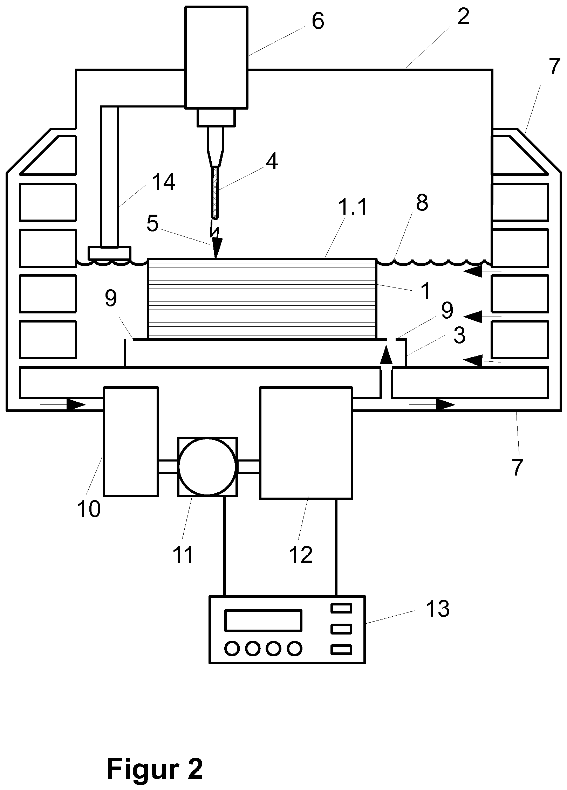

Figur 2 stellt ein Ausführungsbeispiel einer Anlage zur Durchführung des Verfahrens dar. Der Formkörper 1 wird in dem Bauraum 2 auf der Druckplattform 3 schichtweise aufgebaut, indem mittels der Werkstoffzuführeinrichtung 6 von dem Metalldraht 4 mittels des Lichtbogens 5 einzelne Metalltröpfchen abgeschmolzen werden.

In den Bauraum 2 wird über das Zuleitungssystem 7 und die Druckplattform 3, welche die Austrittsöffnungen 9 aufweist, die Wärmeübertragungsflüssigkeit 8 eingeleitet (dargestellt durch die Pfeile).

Die Wärmeübertragungsflüssigkeit 8 strömt durch den Bauraum 2 hindurch und von dort in die Aufbereitungsvorrichtung 10, in welcher die Wärmeübertragungsflüssigkeit 8 gereinigt wird. Von der Aufbereitungsvorrichtung 10 fließt die Wärmeübertragungsflüssigkeit 8 in die Pumpe 11, die es über das Kühl-/Heizsystem 12, wo es auf eine vorgegebene Temperatur abgekühlt wird, wieder in den Bauraum 2 befördert. Hierbei steuert und regelt die Steuer- und Regeleinrichtung 13 die additive Fertigung des Formkörpers 1. Insbesondere liest die Steuer- und Regeleinrichtung 13 den Füllstands-Sensor 14 aus und regelt basierend auf den ausgelesenen Werten den Zu- und Abfluss von der Wärmeübertragungsflüssigkeit 8 in den bzw. aus dem Bauraum 2.

### Bezugszeichenliste

- 1: Formkörper
- 1.1: Fertigungsebene
- 2: Bauraum
- 3: Druckplattform
- 4: Metalldraht / drahtförmiger Werkstoff
- 5: Lichtbogen
- 6: Werkstoffzuführeinrichtung
- 7: Zuleitungssystem
- 8: Wärmeübertragungsflüssigkeit
- 9: Austrittsöffnung
- 10: Aufbereitungsvorrichtung
- 11: Pumpe
- 12: Kühl-/Heizsystem
- 13: Steuer- und Regeleinrichtung
- 14: Füllstands-Sensor

## Patentansprüche

1. Verfahren zur additiven Fertigung unter Verwendung eines drahtförmigen Werkstoffs (4), wobei in einem Bauraum (2) ein zumindest teilweise von einer Wärmeübertragungsflüssigkeit (8) umschlossener Formkörper (1) durch Aufschmelzen von mindestens einem drahtförmigen Werkstoff (4) mittels Energiezufuhr und Abscheiden des schmelzförmigen Werkstoffs in einzelnen aufeinanderfolgenden Schichten hergestellt wird, wobei während des Abscheidens innerhalb des Bauraums (2) ein Flüssigkeitsspiegel der Wärmeübertragungsflüssigkeit (8) eingestellt wird, wobei der Abstand zwischen dem Flüssigkeitsspiegel und einer Werkstoffzuführeinrichtung (6) zur Zuführung des drahtförmigen Werkstoffs (4) während des gesamten Fertigungsprozesses konstant gehalten wird, **dadurch gekennzeichnet, dass**
zu durch ein Ereignis vorgegebenen, wiederkehrenden Zeitabschnitten die Energiezufuhr unterbrochen und der Flüssigkeitsspiegel innerhalb des Bauraums (2) über die oberste Schicht des Formkörpers (1) hinaus angehoben wird.

2. Verfahren nach Anspruch 1, **dadurch gekennzeichnet, dass** der Flüssigkeitsspiegel während des Abscheidens maximal 10 mm unterhalb die Fertigungsebene (1.1) liegt.

3. Verfahren nach einem der Ansprüche 1 oder 2, **dadurch gekennzeichnet, dass** der Bauraum (2) während der Fertigung von der Wärmeübertragungsflüssigkeit (8) durchströmt wird.

4. Verfahren nach einem der Ansprüche 1 oder 2, **dadurch gekennzeichnet, dass** die Wärmeübertragungsflüssigkeit (8) während des Abscheidens des Werkstoffes (4) im Wesentlichen unbewegt ist.

5. Verfahren nach einem der vorstehenden Ansprüche, **dadurch gekennzeichnet, dass** das Ereignis zur Anhebung des Flüssigkeitsspiegels der Ablauf einer vorgegebenen Zeitspanne des Abscheidens ist.

6. Verfahren nach einem der Ansprüche 1 bis 4, **dadurch gekennzeichnet, dass** das Ereignis zur Anhebung des Flüssigkeitsspiegels das Auftreten von Dampfkavitäten in der Wärmeübertragungsflüssigkeit (8) oder das Überschreiten einer vorgegebenen Schwellentemperatur der Fertigungsebene (1.1) ist.

7. Verfahren nach einem der vorstehenden Ansprüche, **dadurch gekennzeichnet, dass** eine korrosionsverhütende Flüssigkeit mit einem hohen Siedepunkt als Wärmeübertragungsflüssigkeit (8) verwendet wird.

8. Verfahren nach einem der vorstehenden Ansprüche, **dadurch gekennzeichnet, dass** die Temperatur und/oder die Durchflussmenge der Wärmeübertragungsflüssigkeit (8) während des Aufbaus des Formkörpers (1) variiert wird.

9. Anlage zur Durchführung des Verfahrens nach einem der vorstehenden Ansprüche, aufweisend einen kästen- oder wannenförmigen Bauraum (2), in welchen mittels Wärmeübertragungsflüssigkeits-Zuleitungen (7, 9) Wärmeübertragungsflüssigkeit (8) einleitbar und mittels Wärmeübertragungsflüssigkeits-Ableitungen Wärmeübertragungsflüssigkeit (8) ausleitbar ist, einen Bearbeitungskopf mit mindestens einer Werkstoffzuführeinrichtung (6) zur Zuführung von wenigstens einem drahtförmigen Ausgangswerkstoff (4), **dadurch gekennzeichnet, dass** die Anlage Mittel (14) zur Bestimmung eines Flüssigkeitsstandes der in den Bauraum (2) eingeleiteten Wärmeübertragungsflüssigkeit (8) und eine Steuer- und Regeleinrichtung (13) aufweist, die eingerichtet ist, bei vorgegebenen Ereignissen den Bearbeitungskopf in lotrechter Richtung zu bewegen und eine Energiezufuhr (5) zum Aufschmelzen des drahtförmigen Ausgangswerkstoffs (4) ein- oder auszuschalten sowie mittels Öffnens und Schließens der Wärmeübertragungsflüssigkeits-Zuleitungen (7, 9) und der Wärmeübertragungsflüssigkeits-Ableitungen einen Flüssigkeitsstand der Wärmeübertragungsflüssigkeit (8) in dem Bauraum (2) mit einem konstanten Abstand in lotrechter Richtung zu dem Bearbeitungskopf zu regeln, und die Steuer- und Regeleinrichtung ferner eingerichtet ist, zu durch ein Ereignis vorgegebenen, wiederkehrenden Zeitabschnitten die Energiezufuhr zu unterbrechen und der Flüssigkeitsspiegel innerhalb des Bauraums (2) über die oberste Schicht des Formkörpers (1) hinaus anzuheben.

10. Anlage nach Anspruch 9, **dadurch gekennzeichnet, dass** der Bearbeitungskopf in lotrechter Richtung bewegbar ist, wobei die Mittel (14) zur Bestimmung des Flüssigkeitsstandes der in den Bauraum (2) eingeleiteten Wärmeübertragungsflüssigkeit (8) in den Bearbeitungskopf integriert oder fest mit diesem verbunden sind.

## Claims

1. A method for additive manufacturing using a wire-shaped material (4), wherein a shaped body (1) surrounded at least partially by a heat-transfer liquid (8) is produced in an assembly space (2) by melting at least one wire-shaped material (4) by means of energy feed and deposition of the material in molten form in individual successive layers, wherein, during the deposition within the assembly space (2), a liquid level of the heat-transfer liquid (8) is adjusted, wherein the distance between the liquid level and a material feed device (6) for feeding the wire-shaped material (4) is kept constant during the entire manufacturing process, **characterised in that**
the energy feed is interrupted at repeated time intervals predefined by an event and the liquid level within the assembly space (2) is raised beyond the uppermost layer of the shaped body (1).

2. The method according to claim 1, **characterised in that** the liquid level during the deposition lies at most 10 mm below the manufacturing plane (1.1).

3. The method according to either one of claims 1 or 2, **characterised in that** the heat-transfer liquid (8) flows through the assembly space (2) during the manufacturing process.

4. The method according to either one of claims 1 or 2, **characterised in that** the heat-transfer liquid (8) is substantially unmoved during the deposition of the material (4).

5. The method according to any one of the preceding claims, **characterised in that** the event for raising the liquid level is the expiry of a predefined period of time for the deposition.

6. The method according to any one of claims 1 to 4, **characterised in that** the event for raising the liquid level is the occurrence of vapour cavities in the heat-transfer liquid (8) or the exceeding of a predefined threshold temperature of the manufacturing plane (1.1).

7. The method according to any one of the preceding claims, **characterised in that** a corrosion-resistant liquid with a high boiling point is used as heat-transfer liquid (8).

8. The method according to any one of the preceding claims, **characterised in that** the temperature and/or the flow rate of the heat-transfer liquid (8) is varied during the construction of the shaped body (1).

9. An installation for carrying out the method according to any one of the preceding claims, said installation comprising a box-shaped or trough-shaped assembly space (2), into which heat-transfer liquid (8) can be introduced by means of heat-transfer liquid feed lines (7, 9) and from which heat-transfer liquid (8) can be discharged by means of heat-transfer liquid discharge lines, a processing head with at least one material feed device (6) for feeding at least one wire-shaped starting material (4), **characterised in that** the installation comprises means (14) for determining a liquid level of the heat-transfer liquid (8) introduced into the assembly space (2) and an open-loop and closed-loop control device (13), which is designed, when predefined events occur, to move the processing head in a vertical direction and to switch on or off an energy feed (5) for melting the wire-shaped starting material (4) and to control a liquid level of the heat-transfer liquid (8) in the assembly space (2) with a constant distance in the vertical direction from the processing head by opening and closing the heat-transfer liquid feed lines (7, 9) and the heat-transfer liquid discharge lines, and the open-loop and closed-loop control means is also designed to interrupt the energy feed at repeated time intervals predefined by an event and to raise the liquid level within the assembly space (2) beyond the uppermost layer of the shaped body (1).

10. The installation according to claim 9, **characterised in that** the processing head is movable in the vertical direction, wherein the means (14) for determining the liquid level of the heat-transfer liquid (8) introduced into the assembly space (2) are integrated in the processing head or are fixedly connected thereto.

## Revendications

1. Procédé de fabrication additive moyennant l'utilisation d'une matière sous forme de fil (4), où, dans un espace de montage (2), un corps moulé (1) entouré au moins partiellement d'un fluide caloporteur (8) est fabriqué par fusion d'au moins une matière sous forme de fil (4) au moyen d'un apport d'énergie et par la précipitation de la matière sous forme de produit fondu en couches individuelles successives, où, pendant la précipitation à l'intérieur de l'espace de montage (2), on règle un niveau de liquide du fluide caloporteur (8), où la distance entre le niveau de liquide et une installation d'alimentation de matière (6) pour l'alimentation de la matière sous forme de fil (4) est maintenue constante pendant tout le processus de façonnage, **caractérisé en ce qu'**à des intervalles de temps prédéfinis par un événement, répétés, l'alimentation en énergie est interrompue et le niveau de liquide à l'intérieur de l'espace de montage (2) est élevé au-dessus de la couche supérieure du corps moulé (1).

2. Procédé selon la revendication 1, **caractérisé en ce que** le niveau de liquide se situe au maximum à 10 mm en dessous du plan de façonnage (1.1) pendant la précipitation.

3. Procédé selon l'une des revendications 1 ou 2, **caractérisé en ce que** l'espace de montage (2) est traversé par le fluide caloporteur (8) pendant le façonnage.

4. Procédé selon l'une des revendications 1 ou 2, **caractérisé en ce que** le fluide caloporteur (8) reste dans l'ensemble immobile pendant la précipitation de la matière (4).

5. Procédé selon l'une des revendications précédentes, **caractérisé en ce que** l'événement provoquant l'élévation du niveau de liquide est l'échéance d'un intervalle de temps prédéfini de la précipitation.

6. Procédé selon l'une des revendications 1 à 4, **caractérisé en ce que** l'événement provoquant l'élévation du niveau de liquide est l'apparition de cavités de vapeur dans le fluide caloporteur (8) ou le dépassement d'une température de seuil prédéfini du plan de façonnage (1.1).

7. Procédé selon l'une des revendications précédentes, **caractérisé en ce qu'**un fluide anticorrosion avec un point d'ébullition élevé est employé en tant que fluide caloporteur (8).

8. Procédé selon l'une des revendications précédentes, **caractérisé en ce que** la température et/ou le débit du fluide caloporteur (8) sont modifiés pendant l'élaboration du corps moulé (1).

9. Installation pour l'exécution du procédé selon l'une des revendications précédentes, présentant un espace de montage (2) en forme de boîte ou de cuvette, dans lequel un fluide caloporteur (8) peut être alimenté au moyen de conduites d'alimentation de fluide caloporteur (7, 9) et le fluide caloporteur (8) peut être retiré au moyen de conduites de sortie de fluide caloporteur, une tête de façonnage avec au moins une installation d'alimentation de matière (6) pour l'alimentation d'au moins une matière de départ sous forme de fil (4), **caractérisée en ce que** l'installation présente des moyens (14) pour la détermination d'un niveau de liquide d'un fluide caloporteur (8) introduit dans l'espace de montage (2) et une installation de commande et de régulation (13), qui est conçue, lors d'événements prédéfinis, déplacer la tête de façonnage dans une direction d'aplomb et mettre en marche ou arrêter une alimentation en énergie (5) pour la fusion de la matière de départ sous la forme de fil (4), ainsi que régler, au moyen de l'ouverture et de la fermeture des conduites d'alimentation en fluide caloporteur (7, 9) et des conduites de sortie de fluide caloporteur, un niveau de liquide du fluide caloporteur (8) dans l'espace de montage (2) avec une distance constante dans la direction de l'aplomb vis-à-vis de la tête de façonnage, et l'installation de commande et de régulation est en outre installée pour interrompre l'alimentation en énergie à des intervalles de temps prédéfinis par un événement, répétés et élever le niveau de liquide à l'intérieur de l'espace de montage (2) au dessus de la couche supérieure du corps moulé (1).

10. Installation selon la revendication 9, **caractérisée en ce que** la tête de façonnage est mobile dans la direction d'aplomb, les moyens (14) pour la détermination du niveau de liquide du fluide caloporteur (8) introduit dans l'espace de montage (2) étant intégrés dans la tête de façonnage ou solidement reliés à celle-ci.
